# EUROPEAN PATENT APPLICATION

(11) **EP 1 930 180 A1**
(43) Date of publication of application: **11.06.2008**
(21) Application number: 07122323.4
(22) Date of filing: 04.12.2007
(51) Int. Cl.: B44C 1/17, B44C 1/14, B44F 1/06, B32B 37/12, B32B 15/08

(54) **Decoration for application to transparent interior components**

(30) Priority: 05.12.2006 IT BO20060834
(71) Applicant: Giusto Manetti Battiloro S.p.A., 50144 Firenze (IT)
(72) Inventor: Manetti,, Bernardo, 50041 Calenzano (IT)
(74) Representative: Jorio, Paolo

(57) **Abstract**

A decoration for application to transparent interior components, such as glass or methacrylate, and having, in succession, a backing layer (2); a heat-melt adhesive layer (3); and a decorative layer (4) fixed by adhesive to a surface of the transparent component. The method of producing the decoration for application to transparent components includes an application step (F1), in which a decorative layer (4) is applied to a backing layer (2) with the interposition of a heat-melt adhesive layer (3); a fixing step (F2), in which pressure and heat are applied to the decorative layer (4) to activate the heat-melt adhesive layer (3) and fix the decorative layer (4) to the backing layer (2); and a peeling step (F3), in which a polymer layer (10), used to transport the decorative layer (4), is removed from the opposite surface of the decorative layer (4) to the backing layer (2).

## Description

The present invention relates to a decoration for application to transparent interior components, such as glazing or methacrylate sheets.

At present, glazing is decorated using the silkscreen process, which gives excellent results, but is expensive and time-consuming.

It is an object of the present invention to provide a method of decorating transparent interior components, which provides for achieving attractive products, while at the same time being cheap and easy to implement.

According to the present invention, there is provided a decoration for application to transparent interior components, and comprising, in succession, a backing layer; a heat-melt adhesive layer; and a decorative layer fixed by adhesive to a surface of the transparent component.

In a preferred embodiment, the backing layer is made of paper or a polymer material in the group comprising PET-G, polymethyl acrylate, polycarbonate, PVC, polyurethane.

It is a further object of the present invention to provide a method of producing a decoration for application to transparent interior components, said method being characterized by comprising, in succession, an application step, in which a decorative layer is applied to a backing layer with the interposition of a heat-melt adhesive layer; a fixing step, in which pressure and heat are applied to said decorative layer to activate the heat-melt adhesive layer and fix the decorative layer to the backing layer; and a peeling step, in which a polymer layer, used to transport the decorative layer, is removed from the opposite surface of the decorative layer to the backing layer.

A non-limiting embodiment of the invention will be described by way of example with reference to the accompanying drawings, in which:
Figure 1 shows a section of the decoration according to the present invention;
Figure 2 shows the Figure 1 decoration in the making;
Figure 3 shows a section of the decoration applied to glass.

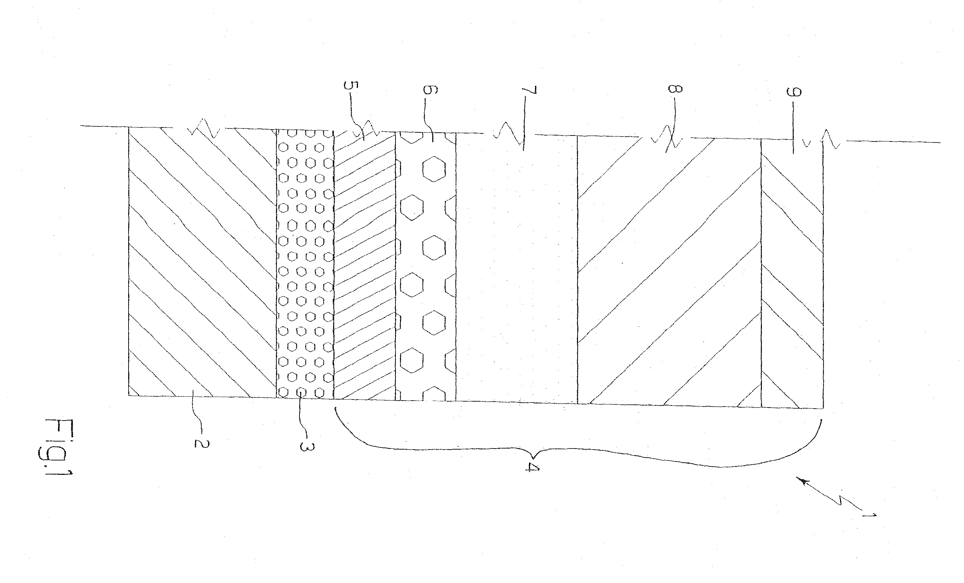

Number 1 in Figure 1 indicates as a whole a decoration in accordance with the present invention.

Decoration 1 comprises a backing layer 2, a heat-melt adhesive layer 3, and a decorative layer 4.

Backing layer 2 is made of paper or a polymer material in the group comprising PET-G, polymethyl acrylate, polycarbonate, PVC, polyurethane.

Heat-melt adhesive layer 3 is defined by a material in the group comprising vinyl-based heat seal lacquer, acrylic-based heat seal lacquer, and polyurethane-based heat seal lacquer.

As shown in Figure 1, decorative layer 4 comprises an adhesive layer 5; a metal/adhesive connecting layer 6; a metalized layer 7 formed by sublimation to give a metallic effect; a decoration layer 8 formed using pigments and/or lacquer using known techniques; and a surface layer 9 for enabling removal of a polymer cover layer used to transport decorative layer 4.

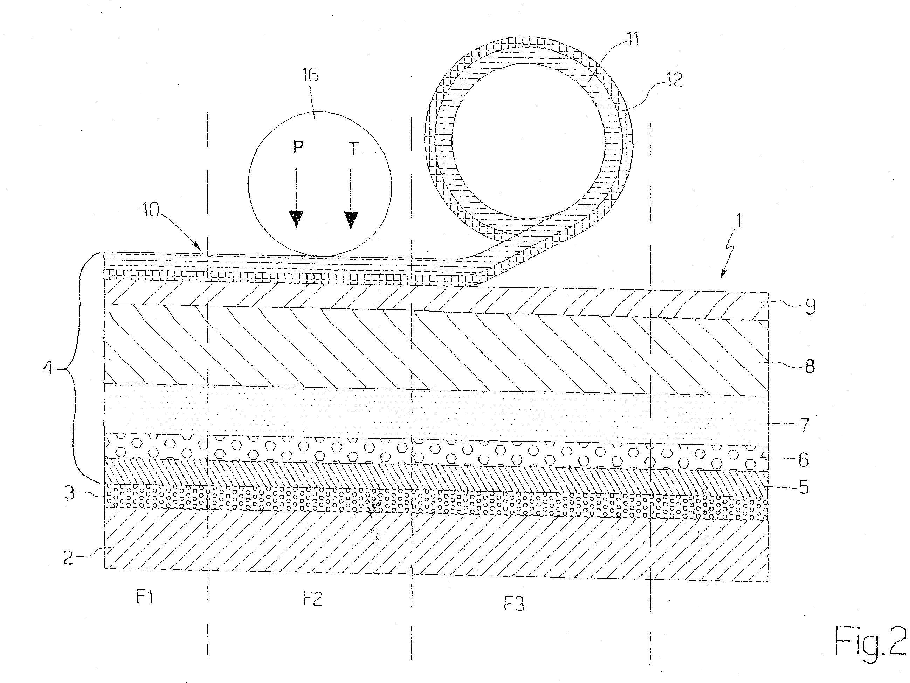

Figure 2 shows decoration 1 in the making.

The method of producing decoration 1 comprises an application step F1, in which decorative layer 4, including a polymer cover layer 10, is applied to backing layer 2, with the interposition of adhesive layer 3. Following application step F1, the method comprises a fixing step F2, in which a heated calender 16 applies pressure and heat on polymer cover layer 10 to activate adhesive layer 3 and so fix decorative layer 4 to backing layer 2. Following fixing step F2, the method comprises a peeling step F3, in which polymer cover layer 10 is removed.

More specifically, polymer cover layer 10 comprises a polyester layer 11 and a peel-off layer 12.

Backing layer 2 and adhesive layer 3 may either also be joined at application step F1, or form a one-piece product used and marketed as such.

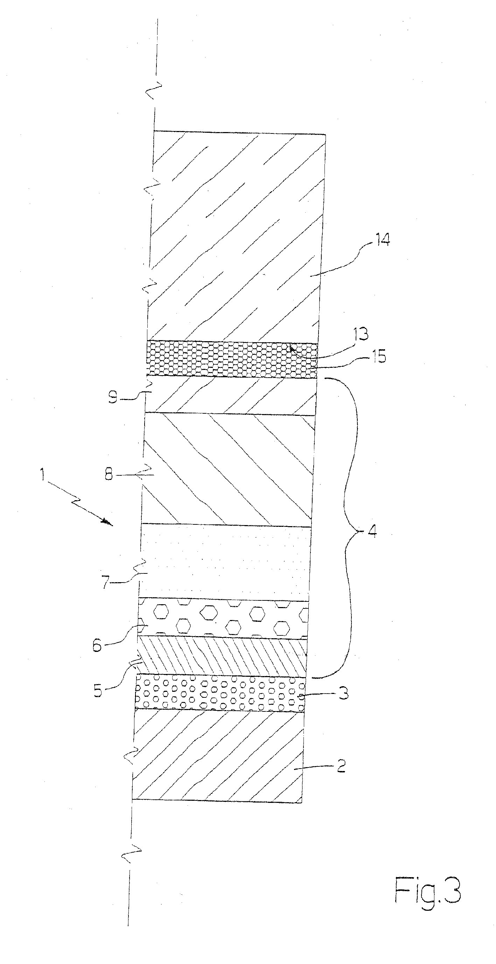

Figure 3 shows decoration 1 applied to a surface 13 of a sheet of glass 14. As shown in Figure 3, decoration 1 is applied with decorative layer 4 on surface 13 and with the interposition of a layer of transparent glue 15, which is solvent- or water-based epoxy glue.

As will be clear from the above description, the present invention provides for decorating transparent components, such as glazing or methacrylate sheets, quickly and easily, by simply applying the decoration according to the present invention - which incorporates the metalized decorated surface - to the selected surface; and the end look is guaranteed by the transparency of glue layer 15 and by decorative layer 4.

A major advantage of this solution is that, unlike direct on-surface decorating and metalizing techniques, the same decoration can be applied to a wide range of interior components, with no limit to the feasibility of the surfaces for decorating.

Moreover, when the backing layer is made of polymer material, and the decoration is applied to glass, the glass, in the event of breakage, is prevented from shattering, and the product held firmly together.

## Claims

1. A decoration for application to transparent interior components, and comprising, in succession, a backing layer (2); a heat-melt adhesive layer (3); and a decorative layer (4) fixed by adhesive to a surface of the transparent component.

2. A decoration as claimed in Claim 1, **characterized in that** the backing layer (2) is made of paper or a polymer material in the group comprising PET-G, polymethyl acrylate, polycarbonate, PVC, polyurethane.

3. A decoration as claimed in Claim 1 or 2, **characterized in that** the heat-melt adhesive layer (3) is made of a material in the group comprising vinyl-based heat seal lacquer, acrylic-based heat seal lacquer, and polyurethane-based heat seal lacquer.

4. A decoration as claimed in any one of the foregoing Claims, **characterized in that** the decorative layer (4) comprises an adhesive layer (5); a metal/adhesive connecting layer (6); a metalized layer (7) formed by sublimation to give a metallic effect; and a decoration layer (8) formed using pigments and/or lacquer.

5. A method of producing a decoration for application to transparent interior components, said method being **characterized by** comprising, in succession, an application step (F1), in which a decorative layer (4) is applied to a backing layer (2) with the interposition of a heat-melt adhesive layer (3); a fixing step (F2), in which pressure and heat are applied to said decorative layer (4) to activate the heat-melt adhesive layer (3) and fix the decorative layer (4) to the backing layer (2); and a peeling step (F3), in which a polymer layer (10), used to transport the decorative layer (4), is removed from the opposite surface of the decorative layer (4) to the backing layer (2).

6. A method as claimed in Claim 5, **characterized in that** the backing layer (2) and the heat-melt adhesive layer (3) form a one-piece product usable as such.

7. A method as claimed in Claim 5 or 6, **characterized in that** said fixing step (F2) is performed using a heated calender (16).

8. A method of decorating transparent components, **characterized by** comprising a step of applying a decoration (1), as claimed in Claims 1-4, to a surface of a transparent interior component (14) with the interposition of a layer of transparent glue (15) between said transparent component (14) and the decorative layer (4).

9. A method as claimed in Claim 8, **characterized in that** the layer of transparent glue (15) is solvent- or water-based epoxy glue.

10. A decorated transparent interior component, **characterized by** comprising a decoration as claimed in one of Claims 1 to 4.
